Europäisches Patentamt

**European Patent Office**

Office européen des brevets

(11) Publication number: **0 148 019**

**A2**

(12) # EUROPEAN PATENT APPLICATION

(21) Application number: **84309039.0**

(22) Date of filing: **21.12.84**

(51) Int. Cl.⁴: **B 62 D 55/20**

(30) Priority: **28.12.83 JP 199514/83 U**

(43) Date of publication of application:
**10.07.85 Bulletin 85/28**

(84) Designated Contracting States:
**DE FR GB IT**

(71) Applicant: **Maruma Jyusharyo Kabushiki Kaisha
2-19 Sakuragaoka, 1-chome
Setagaya-ku Tokyo(JP)**

(72) Inventor: **Moriki, Yasumitsu
1-2-19 Sakuraga-oka
Setagaya-ku Tokyo(JP)**

(72) Inventor: **Numakura, Hirotomo
1-2-19 Sakuraga-oka
Setagaya-ku Tokyo(JP)**

(74) Representative: **Smith, Philip Antony et al,
REDDIE & GROSE 16 Theobalds Road
London WC1X 8PL(GB)**

(54) **Apparatus for actuating rams on a track press.**

(57) Continuous link track as used on heavy duty machinery such as bulldozers is assembled and dismantled using a hydraulic press consisting of a plurality of rams all actuated by a common lever (1). Each function of the press corresponds to a particular set of ram movements as dictated by the lever (1) which configures a hydraulic circuit by means of two, three position, four port hydraulic valves (6 + 7). A valve spool (6a and 7a) on each hydraulic valve (6 and 7) is mechanically connected to the lever (1) via an assembly of linkages (20) which allows the lever (1) to move in two mutually orthogonal directions (A-B and X-Y). Movement of the lever (1) in each direction governs the action of a corresponding hydraulic valve (6 or 7).

FIG.4

TITLE OF THE INVENTION

APPARATUS FOR ACTUATING RAMS ON A TRACK PRESS

BACKGROUND OF THE INVENTION

FIELD OF THE INVENTION

The present invention relates to an apparatus for actuating rams on a track press when track chain usable for bulldozer or the like machine is assembled, reassembled or disassembled and more particularly to improvement of or relating to an apparatus of the above-mentioned type including two 3 positions-4 ports type switching valves to perform four kinds of operations merely by handling a single actuating lever.

DESCRIPTION OF THE PRIOR ART

A conventional track press is constructed such that a switching valve is provided for each of ram cylinders and the latter are actuated by handling two levers separately.

Due to the arrangement made in that way an operator is required to displace his hand from one to other lever at every time when a certain operation is to be performed or handle both the levers by his hands at the same time. Since there is necessity for handling more than one handles separately, complicated assembling, reassembling or disassembling operation is performed only with heavy burden imposed on him. Thus, there is a fear of causing trouble with the track press, resulting in reduced safety for him. Accordingly, requirements have been raised for safe operation with minimized occurrence of wrong lever handling particularly when pressing operation is to be performed.

Further, since lever handling for the track press is complicated, there often occurs loss in time required for an operator to make his decision at each of operations, resulting in reduced operational efficiency.

## SUMMARY OF THE INVENTION

Thus, the present invention has been made with the foregoing background in mind.

It is an object of the present invention to provide an improved apparatus of the early-mentioned type which assures increased safety and operational efficiency.

It is other object of the present invention to provide an improved apparatus of the early-mentioned type which is easy to be operated with minimized loss in time required for an operator to make his decision.

It is another object of the present invention to provide an improved apparatus of the early-mentioned type which is operated without any fear of causing trouble with the track press.

To accomplish the above objects there is proposed according to the invention an apparatus for actuating rams on a track press with a pair of ram cylinders mounted thereon to be operated when a line of track chain is to be assembled, reassembled or disassembled, wherein the improvement consists in that a first 3 positions-4 ports type switching valve having A port, B port, P port and discharge port is disposed at the position located midway of hydraulic pipings extending between the bottom sides and the head sides of the ram cylinders; a second 3 positions-4 ports type switching valve having A port, B port, P port and discharge port is disposed at the position located upstream of the first switching valve in such a manner that P port of the second switching valve is in communication with a hydraulic pressure source and A and B ports of the same are in communication with A and B ports of the first switching valve; both the first and second switching valves are fixedly secured to the frame structure of the track press; valve spools of the first and second switching valves are operatively connected to a single actuating lever via a shifting mechanism adapted to actuate both the switching valves which are in operative association with one another; and each of the switching valves assumes one of four operative positions when the actuating lever is handled in accordance with the H-shaped pattern having four corners to reach one of the four corner positions.

Usually, the shifting mechanism is constructed in the form of a link mechanism. Alternatively, the shifting mechanism may be constituted by a plurality of electromagnetical relays which are operatively associated with one another.

Each of the first and second switching valves has three positions, that is, T position, S position and R position and four kinds of operations of the track press are typically performed in the following manner.

When the rams are to be actuated to move toward one another, the first switching valve assumes R position and the second one does R position.

When the rams are to be actuated to move away from one another, the first switching valve assumes R position and the second one does T position.

When the rams are to be actuated to move in the same direction, the first switching valve assumes T position and the second one does T position.

When the rams are to be actuated to move in the same direction opposite to the first-mentioned one, the first switching valve assumes T position and the second one does R position.

As long as both the first and second switching valves assume S position, no operation is performed with the track press.

Other objects, features and advantages of the invention will become more clearly apparent from reading of the following description which has been prepared in conjunction with the accompanying drawings.

## BRIEF DESCRIPTION OF THE DRAWINGS

The accompanying drawings will be briefly described below.

Fig. 1 is a schematic plan view of a combination of track press and feeding apparatus for feeding a line of track chain to the former.

Fig. 2(I) is a hydraulic circuit diagram for the track press at a time when rams are actuated to move toward one another during assembling or reassembling operation.

Fig. 2(II) is a hydraulic circuit diagram for the track press at a time when rams are actuated to move away from one another during assembling or reassembling operation.

Fig. 3(I) is a hydraulic circuit diagram for the track press at a time when both rams are actuated to move in the rightward direction as seen in the drawing during disassembling operation.

Fig. 3(II) is a hydraulic circuit diagram for the track press at a time when both rams are actuated to move in the leftward direction as seen in the drawing during disassemb-

0148019

ing operation.

Fig. 4 is a front view of a shifting mechanism for actuating first and second switching valves which are operatively associated with one another.

Fig. 5 is a side view of the shifting mechanism as seen from the right side in Fig. 4.

Fig. 6 is a plan view of the shifting mechanism in Fig. 4, and

Fig. 7 is a perspective view of a combination of actuating lever and control plate with a H-shaped pattern formed thereon.

DESCRIPTION OF PREFERRED EMBODIMENT

Now, the present invention will be described in a greater detail hereunder with reference to the accompanying drawings which illustrate a preferred embodiment thereof.

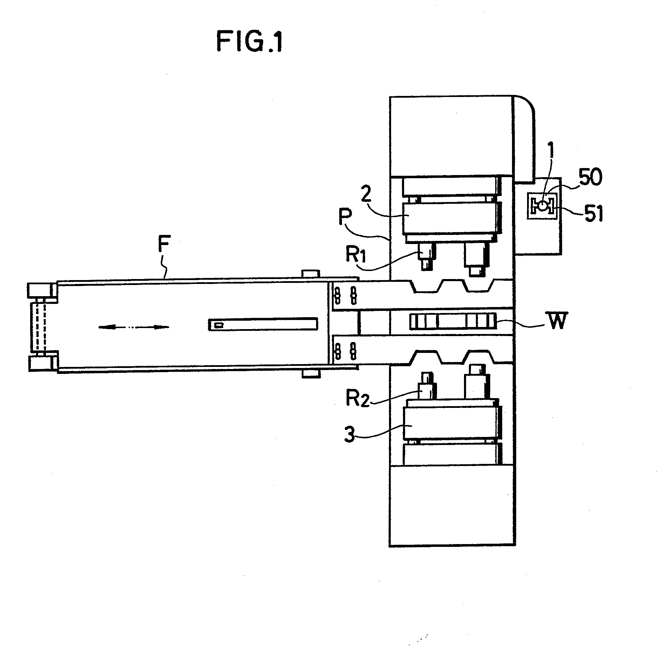

Referring to Fig. 1 which is a schematic plan view of a track press, a feeding apparatus F adapted to displace a line of track chain by a predetermined pitch is disposed at the position located between press jigs R1 and R2 in such a manner that its axis extends at a right angle relative to the axis of the track press P. In the drawing reference letter W designates a jaw insert.

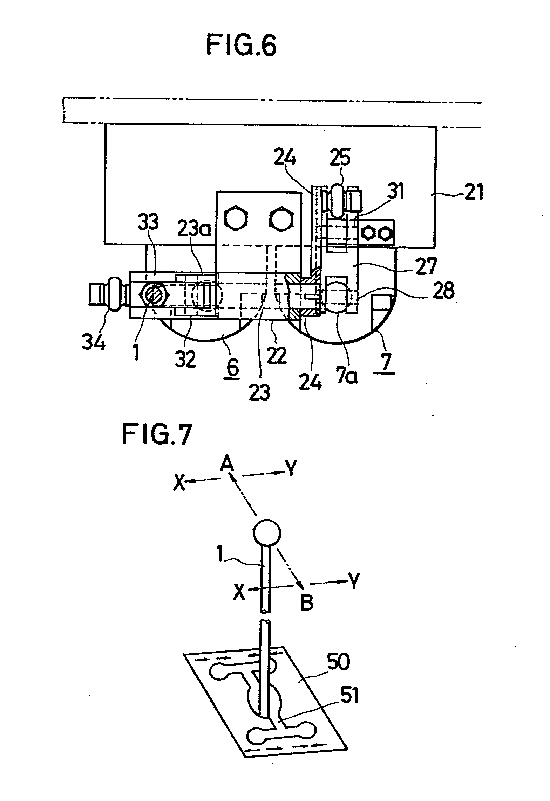

An opposing pair of press jigs R1 and R2 are fitted to the foremost end of the press rams so that they perform

0148019

four kinds of operations required for assembling, reassembling and disassembling track chain in accordance with the predetermined order of operations. It should be noted that each of operations is initiated by means of a single actuating lever 1. As is apparent from Fig. 7, the actuating lever 1 is handled in the H-shaped pattern. Specifically, a certain ram operation is performed at a time when the actuating lever 1 is located at each of four corner positions and it assumes the neutral position when it is located at the central part of the H-shaped pattern.

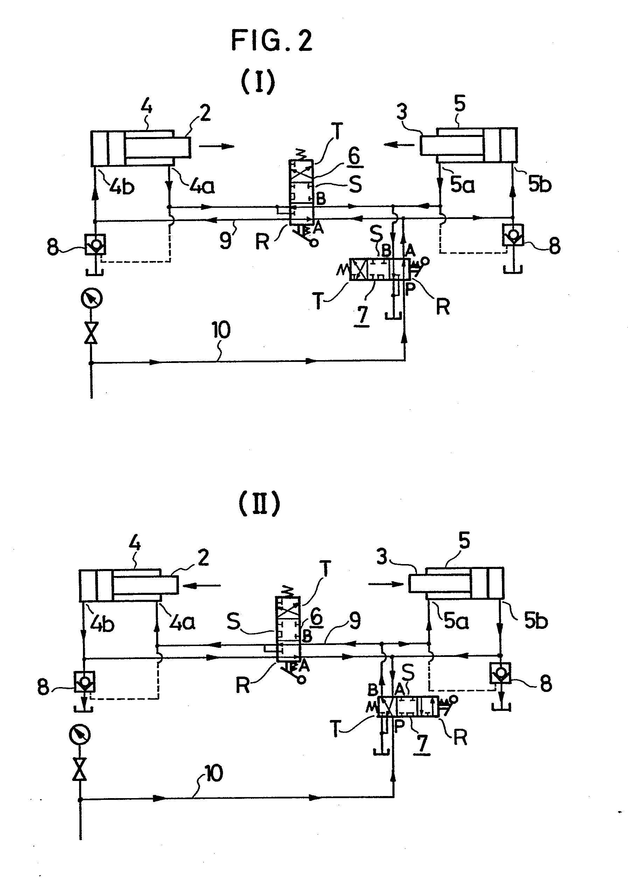

Operations of the rams 2 and 3 during assembling are as illustrated in Figs. 2(I) and (II). Fig. 2(I) is a hydraulic circuit diagram which illustrates operations of the rams when the latter are actuated to move toward one another to carry out pressing operation, whereas Fig. 2(II) is a hydraulic circuit diagram when the rams are actuated to move away from one another.

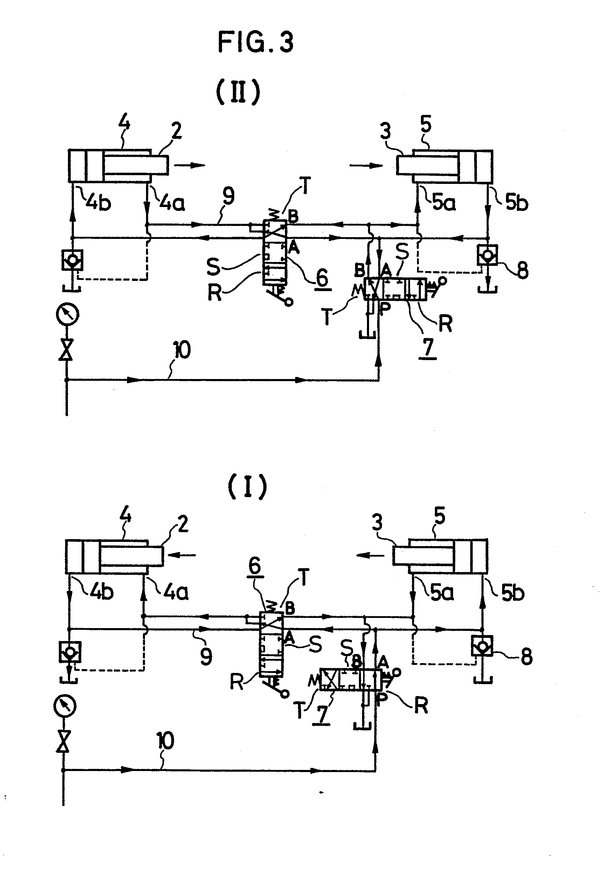

On the other hand, operations of the rams during disassembling are as illustrated in Figs. 3(I) and (II). Fig. 3(I) is a hydraulic circuit diagram which illustrates operations of the rams when both of them are actuated to move in the rightward direction as seen in the drawing, whereas Fig. 3(II) is a hydraulic circuit diagram when both of them are to move in the leftward direction as seen in the drawing.

Head sides 4a and 5a and bottom sides 4b and 5b of the ram cylinders 4 and 5 are operatively connected to one another via a 3 positions-4 ports type switching valve 6 and pipings 9 both of which constitute a closed circuit. The switching valve 6 includes A and B ports which are in communication with A and B ports on another 3 positions-4 ports type switching valve 7 which in turn is in communication with a hydraulic pump (not shown) via a piping 10.

It should be noted that both of the switching valves 6 and 7 are spring biased to return to their initial position under the effect of resillient force of spring means.

In case when the rams are actuated to move toward one another as illustrated in Fig. 2(I), the valve spools in both the switching valves 6 and 7 assume R position.

In Figs. 2(I) and (II) reference numeral 8 designates a check valve for quick return motion of the rams.

In case when the rams are to be retracted after completion of assembling operation, the valve spool in the switching valve 7 is shifted to T position as illustrated in Fig. 2(II) so that the head sides of the ram cylinders 4 and 5 are supplied with pressurized hydraulic oil and thereby the rams are actuated to move backwardly.

In case when a line of chain held in position on the jaw insert W is to be disassembled, the switching valve 6 is shifted to T position and the switching valve 7a is shifted to R position so that each of the rams is actuated to move in the direction as identified by arrow marks in the drawing.

In case when pressing operation is to be performed in the opposite direction, both the switching valves 6 and 7 are shifted to T position.

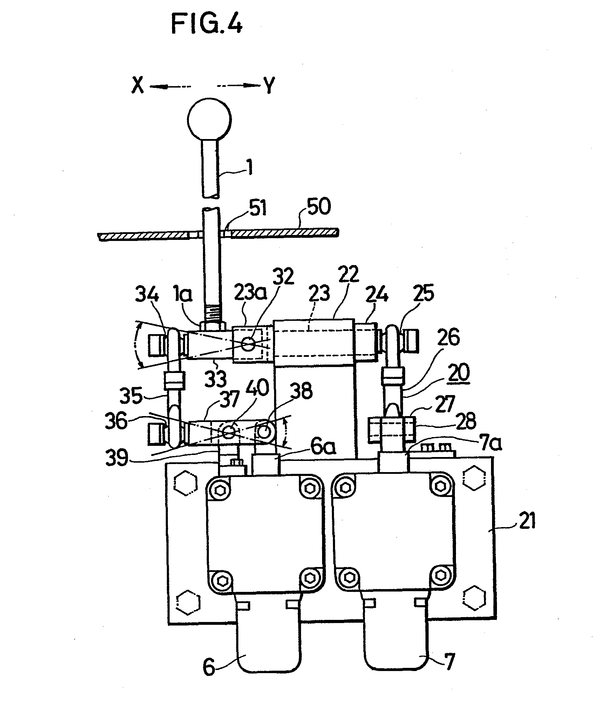

Next, description will be made as to the structure of the switching valves 6 and 7 below with reference to Fig. 4.

As illustrated in Fig. 4, the switching valves 6 and 7 are fixedly mounted on a mounting plate 21 constituting the frame structure in the side-by-side relation and they are operatively connected to the lever 1 via a shifting mechanism 20 adapted to actuate both the switching valves which are operatively associated with one another.

In the drawing reference numeral 22 designates a stationary bracket which serves to pivotally support a rotational shaft 23. Reference numeral 24 designates an arm fixedly secured to the end part of the rotational shaft 23. The arm 24 is operatively connected to a link 26 via pin ball joint or the like means disposed at the foremost end thereof.

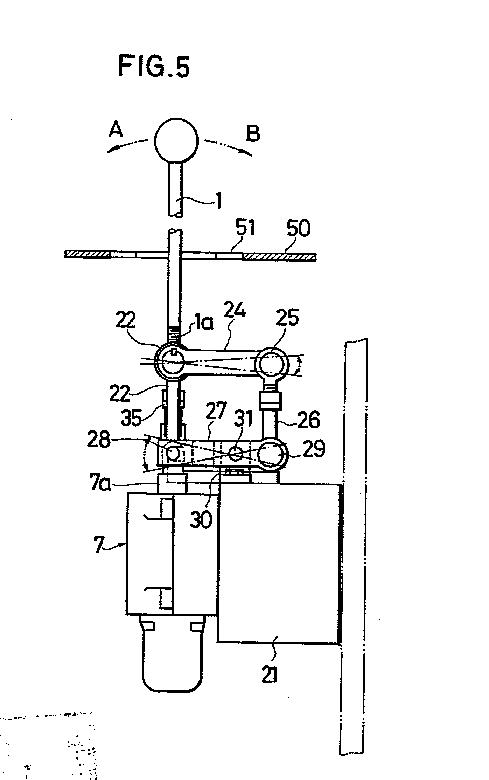

The link 26 is operatively connected to the righthand end of a swing lever 27 by means of a pin 29 and the lefthand end of the swing lever 27 as seen in Fig. 5 in turn is operatively connected to the spool 7a of the switching valve 7 by means of a pin 28. Reference numeral 30 designates a bracket and reference numeral 31 does a pivotal pin. The lefthand end part 23a of the rotational shaft 23 as seen in Fig. 5 is bifurcated in the form of a fork and a pin 32 is extended through the lefthand end part 23a so that an inclinable member 33 is pivotally fitted to the pin 32 in the bifurcated part.

The male threaded portion 1a at the bottom of the lever 1 is threadably engaged to the upper part of the inclinable member 33 and a link 35 is operatively connected to the outermost end part of the inclinable member 33 via a ball joint 34. Further, the link 35 is operatively connected to a swing lever 37 via a ball joint 36.

Further, the righthand end of the swing lever 37 as seen in Fig. 4 is operatively connected to the uppermost end of the valve spool 6a of the switching valve 6 by means of a pin 38. In the drawing reference numeral 39 designates a bracket and reference numeral 40 does a pivotal pin. As illustrated in Fig. 7, the actuating lever 1 is handled along the track of the guide groove 51 on the control plate 50 while scribing the H-shaped pattern. As long as the actuating handle 1 is located in the area as defined between points A and B in Fig. 7, the valve spool of each of the switching valves 6 and 7 assumes S-position which is a neutral position.

The switching valve 7 is shifted to one of end positions while the actuating lever is held at either of points A and B. When it is then handled in the X-Y direction, the switching valve 6 is shifted to one of end positions whereby one of four kinds of operations as described above is performed.

It should of cource be understood that the shifting mechanism for operatively connecting the lever 1 to the switching valves 6 and 7 should not be limited only to the illustrated one but it may be constituted by a combination of electromagnetic relays adapted to be actuated at the each of operational positions.

In the illustrated embodiment two switching valves are arranged in the side-by-side relation on the frame structure of the track press. However, the present invention should not be limited only to this arrangement but two shifting valves may be arranged in any acceptable manner as required. For instance, they may be arranged such that their valve spools are extended at a right angle relative to one another or one valve spool is oriented in the reverse direction relative to other one.

As will be readily understood from the above description, the apparatus of the invention assures that all ram operations for assembling, reassembling or disassembling a line of track chain are performed safely, reliably and quickly merely by handling a single actuating lever on the shifting mechanism including two conventional switching valves, swing links and rotational shaft.

0148019

CLAIMS:

1.    In an apparatus for actuating rams on a track press with a pair of ram cylinders mounted thereon to be operated when a line of track chain is to be assembled, reassembled or disassembled, the improvement consisting in that

a first 3 positions-4 ports type switching valve having A port, B port, P port and discharge port is disposed at the position located midway of hydraulic pipings extending between the bottom sides and the head sides of the ram cylinders,

a second 3 positions-4 ports type switching valve having A port, B port, P port and discharge port is disposed at the position located upstream of said first switching valve in such a manner that P port of the second switching valve is in communication with a hydraulic pressure source and A and B ports of the same are in communication with A and B ports of the first switching valve, both of the first and second switching valves are fixedly secured to the frame structure of the track press, valve spools of both the first and second switching valves are operatively connected to a single actuating lever via a shifting mechanism adapted to actuate both the switching valves which are in operative association with one another, and

each of the switching valves assumes one of four operative positions when said actuating lever is handled in

0148019

accordance with the H-shaped pattern having four corners to reach one of the four corner positions.

2. An apparatus as defined in claim 1, wherein said shifting mechanism comprises a link mechanism.

3. an apparatus as defined in claim 1, wherein said shifting mechanism comprises a plurality of electromagnetical relays which are operatively associated with one another.

4. An apparatus as defined in claim 1, wherein each of the first and second switching valves has three positions comprising T position, S position and R position and when the rams are to be actuated to move toward one another, the first switching valve assumes R position and the second one does R position.

5. An apparatus as defined in claim 1, wherein each of the first and second switching valves has three positions comprising T position, S position and R position and when the rams are to be actuated to move away from one another, the first switching valve assumes R position and the second one does T position.

6. An apparatus as defined in claim 1, wherein each of the first and second switching valves has three positions comprising T position, S position and R position and when the rams are to be actuated to move in the same direction, the first switching valve assumes T position and the second one does T position.

7.  An apparatus as defined in claim 1, wherein each of the first and second switching valves has three positions comprising T position, S position and R position and when the rams are to be actuated to move in the same direction opposite to the first-mentioned one, the first switching valve assumes T position and the second one does R position.

8.  An apparatus as defined in claim 1, wherein each of the first and second switching valves has three positions comprising T position, S position and R position and while they assume S position, no operation is performed with the track press.

9.  An apparatus for actuating a plurality of rams (R) in a hydraulic circuit, characterised in that the hydraulic circuit further consists of a first and a second hydraulic valve (6 and 7), the apparatus being governed by the movement of a single lever (1) connected to a valve spool (6a and 7a) on each hydraulic valve (6 and 7) via a shifting mechanism (20) whereby movement of the lever (1) is restricted to a combination of successive movements in a first and a second direction (X-Y and A-B), movement of the lever along the first direction (X-Y) controlling the action of the first hydraulic valve (6) and movement of the lever along the second direction controlling the action of the second hydraulic valve (7), and the combination of movements positioning the valves to cause the rams (R) to execute a prescribed operation.

10.      Apparatus as claimed in claim 9, characterised in that the shifting mechanism (20) consists of a first bar (23), mounted for rotation about its own axis and connected to a second bar (33) via a pivot (32) whose axis is transverse to the axis of the first bar (23), the lever (1) is fixed to the second bar (33) such that movement of the lever (1) in the first direction (X-Y) swings the second bar about the pivot axis and actuates the first valve spool (6a), the second valve spool (7a) remaining substantially unaffected by such movement, and movement of the lever (1) in the second direction (A-B) rotates the second and first bars (23 and 33) together about the axis of the first bar such that the second valve spool (7a) is actuated, the first valve spool (6a) remaining substantially unaffected by such movement.

## FIG.1

# FIG. 2

## (I)

## (II)

FIG.3

(II)

(I)

FIG.4

FIG.5

0148019

## FIG.6

## FIG.7